# FASCICULE DE BREVET EUROPEEN

(11) **EP 3 619 058 B1**
(45) Date de publication et mention de la délivrance du brevet: **07.04.2021**
(21) Numéro de dépôt: 18723364.8
(22) Date de dépôt: 26.04.2018
(51) Int. Cl.: B60C 11/24

(54) **PNEUMATIQUE A JAUGE D'USURE EXPLICITE**
LUFTREIFEN MIT EXPLIZITEM VERSCHLEISSANZEIGER
PNEUMATIC TYRE WITH EXPLICIT WEAR GAUGE

(30) Priorité: 05.05.2017 FR 1770459
(43) Date de publication de la demande: 11.03.2020
(73) Titulaire: COMPAGNIE GENERALE DES ETABLISSEMENTS MICHELIN, 63000 Clermont-Ferrand (FR)
(72) Inventeur: CARENTZ, Hélène, 63040 Clermont-Ferrand Cedex 9 (FR); DEBORDEAUX, Héloïse, 63040 Clermont-Ferrand Cedex 9 (FR)
(74) Mandataire: Boyer, Chris Michel
(86) Numéro de dépôt international: PCT/FR2018/051059
(87) Numéro de publication internationale: WO 2018/202986

(56) Documents cités:
- DE-A1- 3 627 832
- DE-A1-102008 024 075
- JP-A- 2013 147 085
- JP-U- H0 452 911
- JP-U- S5 675 004
- JP-U- S57 170 304
- US-A- 2 706 509

## Description

### DOMAINE TECHNIQUE DE L'INVENTION

La présente invention concerne un pneumatique comprenant une bande de roulement pourvue d'au moins une rainure, au moins une sculpture de bande de roulement, au moins un témoin d'usure disposé dans la rainure, le témoin d'usure comprenant une face de contact destinée à entrer en contact avec une chaussée lorsque le pneumatique atteint un niveau d'usure limite, ladite sculpture de bande de roulement comprenant, en bordure de la rainure adjacente, un indicateur d'usure.

### ETAT DE LA TECHNIQUE ANTERIEURE

Afin de préserver le niveau de sécurité d'un véhicule, il est opportun de contrôler le niveau d'usure des pneumatiques de façon régulière, et de préférence avant chaque trajet long. Pour cela, l'automobiliste observe la surface de la bande de roulement des pneumatiques et mesure la hauteur des sculptures. Cette mesure est facilitée par un élément présent sur tout type de pneumatique : le témoin d'usure. Le témoin d'usure permet d'évaluer sur une base d'une référence fiable, l'état d'usure des pneumatiques. Ce témoin est typiquement disposé dans les rainures des pneumatiques. Ainsi lorsque les sculptures de la bande de roulement se situent à la même hauteur que les témoins d'usure, (soit par exemple, en Europe, au minimum à 1,6 millimètres de hauteur par rapport au fond de sillon), il convient de remplacer le ou les pneumatiques.

Le témoin d'usure est installé en fond de sillons et se présente généralement sous forme rectangulaire. Il doit être visible non seulement pour l'utilisateur, mais également pour les tiers, par exemple dans le but de permettre de contrôler la conformité des témoins d'usure à la législation. Il est donc important de disposer de repères visuels efficaces et fiables pour permettre de localiser les témoins d'usure de façon simple et rapide. Dans certains cas, les témoins d'usure de certains pneumatiques de véhicules de tourisme, en particulier les modèles dont le châssis est surabaissé, sont moins visibles dans la mesure où des éléments de carrosserie recouvrent la partie haute des pneumatiques. Dans cette situation, le témoin d'usure devient moins visible. L'utilisateur peut alors identifier l'emplacement du témoin d'usure en se référant à un repère situé en zone d'épaule. Un tel repère peut être constitué par le symbole bien connu « TWI » (signifiant en anglais « Tire Wear Indicator », ou en français : indicateur de témoin d'usure), ou tout autre symbole aisément reconnaissable par les utilisateurs.

Le document WO 2008015904 décrit un témoin d'usure en forme de gradin, intégré au design des pains de sculpture. La direction de l'escalier est perpendiculaire à la direction circonférentielle principale de la bande de roulement.

Le document US 20100243116 décrit un bandage pneumatique dans lequel la rainure principale du pneumatique comprend sur un fond de rainure un indicateur d'usure faisant saillie d'une hauteur prédéterminée.

Le document DE 3627832 décrit un pneumatique pour véhicule comportant une bande de roulement qui présente des incisions et qui présente un indicateur d'usure. Afin de permettre un jugement fiable du degré d'usure de la bande de roulement, l'invention prévoit une incision qui s'étend à partir d'une dépression de profil et dont la surface latérale diminue fortement par rapport à la bande de roulement. Les surfaces latérales sont en outre munies d'une multiplicité de marches. L'élévation douce de la surface latérale des incisions précitées permet de réaliser une pluralité d'étages.

Dans ces documents, les gradins ou saillies sont généralement perpendiculaires à la bande de roulement.

Le document EP 250113 décrit une bande de roulement de pneumatique munie de groupes de rainures de différentes profondeurs, de sorte que les rainures s'usent à des taux variables. De préférence, un groupe d'au moins cinq rainures est prévu sur les nervures les plus à l'extérieur du pneumatique à proximité de chaque épaulement et dans la même position circonférentielle. De plus, les rainures sont de préférence faites de longueurs différentes correspondant à leurs profondeurs pour faciliter l'identification. En observant à quelle vitesse les rainures d'un groupe sur une nervure d'épaule s'usent par rapport aux rainures sur l'autre côte d'épaule, une usure irrégulière des nervures d'épaule peut être détectée à un moment précoce dans la vie du pneu.

Ce dispositif permet de détecter une dissymétrie du pneu. Cependant il ne peut pas être pris en compte pour déterminer le taux d'usure.

Le document US 2706509 décrit un pneumatique possédant un témoin d'usure en gradin qui peut avoir différentes formes. Malgré la pluralité de formes et de marches, la lecture de l'indicateur d'usure est difficile et peu claire.

Pour pallier ces différents inconvénients, l'invention prévoit différents moyens techniques.

### EXPOSE DE L'INVENTION

Tout d'abord, un premier objectif de l'invention consiste à prévoir un pneumatique avec un indicateur d'usure de lecture simple et rapide.

Un second objectif de l'invention consiste à prévoir un indicateur d'usure facilitant le suivi de l'évolution du niveau d'usure.

Pour ce faire, le pneumatique comprend une bande de roulement, ladite bande de roulement comprenant au moins une rainure s'étendant selon une direction principale et délimitée par au moins un bloc de mélange caoutchoutique, au moins un témoin d'usure disposé dans la rainure, le témoin d'usure comprenant une face de contact destinée à entrer en contact avec une chaussée lorsque le pneumatique atteint un niveau d'usure limite, ladite bande de roulement comprenant un indicateur d'usure à paliers pourvu d'une pluralité de niveaux, au moins un des niveaux de la pluralité de niveaux de l'indicateur d'usure à paliers s'étendant en creux dans le bloc de mélange caoutchoutique et le niveau de hauteur H la plus faible dudit indicateur d'usure à paliers s'étendant au moins partiellement dans la rainure pour former un prolongement, ledit prolongement formé par le niveau de hauteur H la plus faible dudit indicateur d'usure à paliers s'étendant dans toute la largeur de la rainure et constitue le témoin d'usure.

Le profil en forme d'escalier ainsi que le prolongement formé par le niveau de hauteur H la plus faible dudit indicateur d'usure à paliers s'étendant au moins partiellement dans la rainure procure un point de repère pour localiser l'indicateur d'usure. Le témoin d'usure agencé en prolongement de l'escalier permet d'établir une relation entre l'évolution du taux d'usure fourni par la lecture de l'escalier et la surveillance de l'atteinte du taux d'usure légal fourni par le témoin d'usure.

Selon l'invention le niveau de hauteur H le plus faible s'étend dans toute la largeur de la rainure.

Le prolongement étant particulièrement visible, il facilite la surveillance d'un taux d'usure limite qu'il est important de pouvoir identifier aussitôt que possible.

Selon un mode de réalisation avantageux, la hauteur H est comprise entre 1,6 et 2,2 mm.

De manière avantageuse, l'axe principal EE de l'indicateur d'usure à paliers est sensiblement parallèle à l'axe RR de la rainure.

Le témoin d'usure à paliers est orienté dans le sens circonférentiel. Il permet une comparaison fiable de l'usure de l'ensemble des niveaux car l'usure est constante sur une même bande circonférentielle.

De manière avantageuse, le volume de creux Vc de matière retirée pour former l'indicateur d'usure à paliers correspond sensiblement au volume VP du dernier niveau (de hauteur H) présent dans la rainure.

Le volume de creux Vc et le volume de « plein » VP sont sensiblement correspondants et facilitent la mise en œuvre du moulage. Cette caractéristique confère par ailleurs un impact favorable sur le bruit.

Egalement de manière avantageuse, une inscription correspondant à un taux d'usure de la bande de roulement du pneumatique est prévue à proximité immédiate de chacun des niveaux de l'indicateur d'usure.

Ce mode de réalisation facilite l'interprétation de la lecture de l'indicateur d'usure. Cela permet de suivre l'évolution d'usure de manière très précise et même d'anticiper le moment où le pneumatique devra être remplacé.

L'indicateur d'usure comprend avantageusement entre trois et six niveaux.

Cette architecture permet de voir plus facilement l'évolution de l'usure du pneumatique de façon graduelle.

De manière avantageuse, l'indicateur d'usure comprend quatre niveaux dont le dernier correspond au témoin d'usure.

Cette configuration permet de répartir le taux d'usure de façon à ce que chacun des niveaux représente un saut de 25% du taux d'usure. Cette répartition naturelle et intuitive pour l'utilisateur facilite davantage le suivi.

Selon un mode de réalisation avantageux, une protubérance s'étendant à partir du bloc est agencée à la base de l'indicateur d'usure de manière adjacente au dernier niveau. Cet agencement forme une chicane ou un guide favorisant l'évacuation de l'eau.

En variante, seul le niveau de hauteur H la plus faible de l'indicateur d'usure à paliers s'étend dans la rainure.

Selon une autre variante, tous les niveaux s'étendent en creux dans le bloc excepté le dernier niveau (soit celui de hauteur H la plus faible).

### DESCRIPTION DES FIGURES

Tous les détails de réalisation sont donnés dans la description qui suit, complétée par les figures 1 à 6, présentées uniquement à des fins d'exemples non limitatifs, et dans lesquelles :
- la figure 1 est une vue en perspective d'un indicateur d'usure selon l'invention ;
- la figure 2 est une vue schématique de dessus de l'indicateur d'usure de la figure 1 ;
- les figures 3, 4 et 5 sont des vues schématiques de variantes de l'indicateur d'usure de la figure 2 ;
- la figure 6 est une vue schématique de dessus d'une autre variante de l'indicateur d'usure de la figure 2.

### DESCRIPTION DETAILLEE DE L'INVENTION

### DEFINITIONS

**Par** « pneumatique », on entend tous les types de bandages élastiques soumis à une pression interne ou non.

**Par** « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

**Par** « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

**Par** « flanc » d'un pneumatique, on entend une surface latérale du pneumatique disposée entre la bande de roulement du pneumatique et un bourrelet de ce pneumatique.

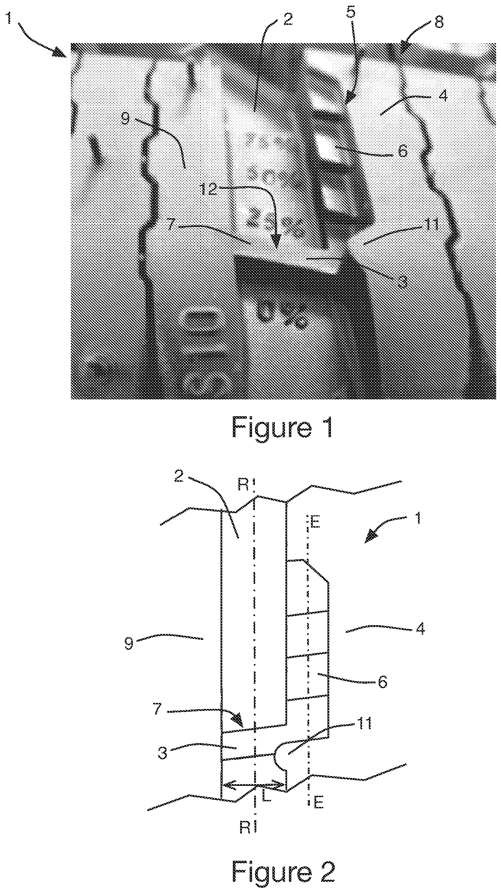

**La** figure 1 illustre une vue partielle d'une bande de roulement 8 d'un pneumatique 1 avec un exemple d'indicateur d'usure 5 selon l'invention. Cet indicateur d'usure 5 à paliers comprend plusieurs niveaux 4. Dans cet exemple, l'indicateur d'usure 5 comprend quatre niveaux 4 creusés dans le sens de défilement de la bande de roulement 8. Le dernier niveau de l'indicateur d'usure forme un prolongement 7 qui s'étend sensiblement transversalement sur le fond de la rainure 2 adjacente. Ce prolongement 7 s'étend de préférence d'un côté à l'autre de la rainure 2, entre deux sculptures 4 et 9 de bande de roulement.

Dans les exemples de réalisation illustrés, le prolongement 7 forme le témoin d'usure 3. Des inscriptions correspondant à des pourcentage de l'usure de la bande de roulement sont prévues en regard de chacun des niveaux 6 et du témoin d'usure 3. En fonction de l'usure de la bande de roulement, la surface de contact de celle-ci correspond ou se rapproche d'un des niveaux, indiquant le pourcentage restant à user. En variante, les inscriptions sont inversées et indiquent le pourcentage de bande de roulement déjà usée.

Dans les exemples illustrés, le volume de matière virtuellement retirée du bloc de mélange caoutchoutique 4 pour former les niveaux 6 de l'indicateur d'usure correspond sensiblement au volume de matière utilisée pour former le prolongement 7 dans la rainure 2. Cette caractéristique présente un avantage considérable pour faciliter le moulage de la bande de roulement. Cet aspect contribue par ailleurs à réduire le niveau sonore du pneumatique.

La figure 2 est une représentation schématique de l'indicateur d'usure de la figure 1, vue de dessus. Les niveaux 6 de l'indicateur d'usure 5 sont alignés sur un axe EE qui est sensiblement parallèle à l'axe RR de la rainure 2 adjacente. Par conséquent, tous les niveaux 6 se situent sur la même portion circonférentielle de la bande de roulement 8. Sur cette figure, le témoin d'usure est situé du côté extérieur de la bande de roulement, les niveaux supérieurs étant du côté du centre du pneumatique. Cela permet de prévenir le conducteur dans les cas particuliers où le pneumatique s'use plus vite à l'épaule qu'au centre. L'évolution de l'usure donnée par l'indicateur d'usure est donc très fiable et précise.

Tel qu'illustré à la figure 2, la largeur L de la rainure 2 correspond à l'écart transversal de la rainure entre les deux sculptures adjacentes 4 et 9 de la bande de roulement. Egalement dans cet exemple, le témoin d'usure se termine par une protubérance 11, adjacente au niveau le plus bas et se prolongeant légèrement dans la rainure. Un tel agencement permet de dévier le flux d'eau en fond de rainure sans engendrer de perturbation du flux.

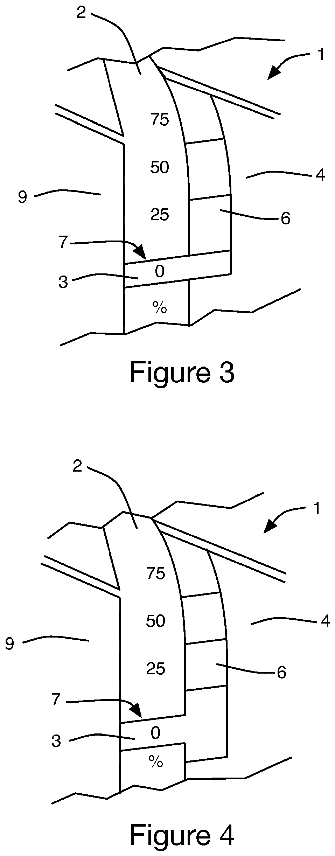

Les figures 3 à 5 illustrent des variantes de réalisation du témoin d'usure où la rainure 2 et le témoin d'usure 3 progressent selon un parcours légèrement courbé.

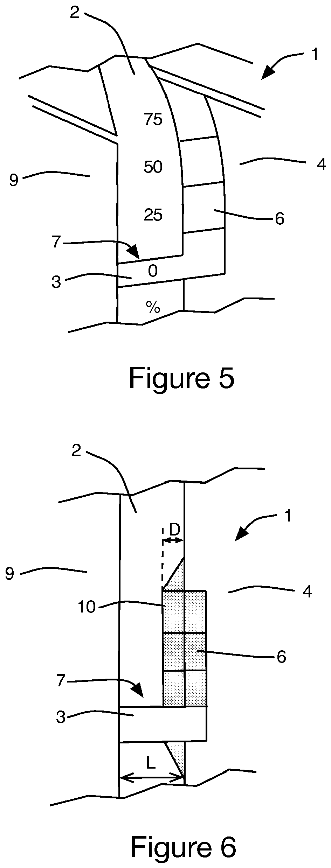

Les figures 4 et 5 sont des variantes de réalisation du témoin d'usure de la figure 2 illustrant un témoin d'usure 3 en forme de « T » dans l'exemple de la figure 4 et en forme de « L » dans l'exemple de la figure 5. Ces architectures permettent de raccorder le prolongement 7 au dernier niveau 6 de l'indicateur d'usure 5 de façon élégante et fonctionnelle.

La figure 6 est une variante de l'indicateur d'usure de la figure 2 où l'ensemble des niveaux 6 se prolongent latéralement dans la rainure adjacente 2, formant un dépassement 10. La largeur D du dépassement 10 est inférieure à 50% de la largeur L de la rainure 2. Cette configuration peut permettre de lire plus facilement l'évolution de l'usure du pneumatique.

En variante, le témoin d'usure selon l'invention est disposé le long de sillons longitudinaux, ou transversaux, ou obliques. Les témoins sont agencés préférentiellement en zone épaule, soit vers 25% du bord de l'aire de contact. Le prolongement 7 a une largeur minimale de 2 mm, sa largeur étant plus préférentiellement entre 2 mm et 4 mm.

Les indicateurs d'usure 5 présentés dans les différentes figures permettent aux utilisateurs d'obtenir de façon simple et intuitive, sans outil, le niveau d'usure actuel du pneumatique. Le profil en forme d'escalier permet de suivre l'évolution du taux d'usure et de mieux anticiper le moment optimal pour changer le pneumatique usé sans dépasser le taux d'usure maximal préconisé.

### Numéros de référence employés sur les figures

- 1: Pneumatique
- 2: Rainure
- 3: Témoin d'usure
- 4: Bloc de mélange caoutchoutique
- 5: Indicateur d'usure à paliers
- 6: Niveaux de l'indicateur d'usure
- 7: Prolongement
- 8: Bande de roulement
- 9: Seconde sculpture

- 10: Dépassement
- 11: Protubérance
- 12: Face de contact du témoin d'usure

## Revendications

1. Pneumatique (1) comprenant une bande de roulement (8), ladite bande de roulement comprenant au moins une rainure (2) s'étendant selon une direction principale et délimitée par au moins un bloc (4) de mélange caoutchoutique, au moins un témoin d'usure (3) disposé dans la rainure (2), le témoin d'usure comprenant une face de contact (12) destinée à entrer en contact avec une chaussée lorsque le pneumatique atteint un niveau d'usure limite, ladite bande de roulement (8) comprenant un indicateur d'usure (5) à paliers pourvu d'une pluralité de niveaux (6), au moins un des niveaux (6) de la pluralité de niveaux de l'indicateur d'usure (5) à paliers s'étendant en creux dans le bloc (4) de mélange caoutchoutique et le niveau de hauteur H la plus faible dudit indicateur d'usure (5) à paliers s'étendant au moins partiellement dans la rainure (2) pour former un prolongement (7), **caractérisé en ce que** ledit prolongement (7) formé par le niveau de hauteur H la plus faible dudit indicateur d'usure (5) à paliers s'étend dans toute la largeur de la rainure (2) et constitue le témoin d'usure (3).

2. Pneumatique (1) selon la revendication 1, dans lequel la hauteur H est comprise entre 1,6 et 2,2 mm.

3. Pneumatique (1) selon l'une quelconque des revendications 1 ou 2, dans lequel l'axe principal (EE) de l'indicateur d'usure (5) à paliers est sensiblement parallèle à l'axe (RR) de la rainure (2).

4. Pneumatique (1) selon l'une quelconque des revendications 1 à 3, **caractérisé en ce que** le volume de creux Vc de matière retirée pour former l'indicateur d'usure à paliers correspond sensiblement au volume VP du dernier niveau présent dans la rainure.

5. Pneumatique (1) selon l'une quelconque des revendications 1 à 4, **caractérisé en ce qu'**une inscription correspondant à un taux d'usure de la bande de roulement (8) du pneumatique (1) est prévue à proximité immédiate de chacun des niveaux (6) de l'indicateur d'usure.

6. Pneumatique (1) selon l'une quelconque des revendications 1 à 5, dans lequel l'indicateur d'usure comprend entre trois et six niveaux (6).

7. Pneumatique (1) selon l'une quelconque des revendications 1 à 6, dans lequel l'indicateur d'usure comprend quatre niveaux (6) dont le dernier correspond au témoin d'usure (3).

8. Pneumatique (1) selon l'une quelconque des revendications 1 à 7, dans lequel une protubérance (11) s'étendant à partir du bloc (4) est agencée à la base de l'indicateur d'usure de manière adjacente au dernier niveau.

9. Pneumatique (1) selon l'une quelconque des revendications 1 à 8, dans lequel seul le niveau de hauteur H la plus faible de l'indicateur d'usure (5) à paliers s'étend dans la rainure (2).

10. Pneumatique (1) selon l'une quelconque des revendications 1 à 9, dans lequel tous les niveaux s'étendent en creux dans le bloc (4) excepté le dernier niveau.

## Patentansprüche

1. Reifen (1), welcher einen Laufstreifen (8) umfasst, wobei der Laufstreifen wenigstens eine Rille (2) umfasst, die sich in einer Hauptrichtung erstreckt und von wenigstens einem Block (4) aus Kautschukmischung begrenzt wird, wobei wenigstens ein Verschleißanzeiger (3) in der Rille (2) angeordnet ist, wobei der Verschleißanzeiger eine Kontaktfläche (12) umfasst, die dazu bestimmt ist, mit einer Fahrbahn in Kontakt zu kommen, wenn der Reifen eine Abnutzungsgrenze erreicht, wobei der Laufstreifen (8) einen Verschleißindikator (5) mit Stufen umfasst, der mit mehreren Niveaus (6) versehen ist, wobei sich wenigstens eines der Niveaus (6) von den mehreren Niveaus des Verschleißindikators (5) mit Stufen vertieft in dem Block (4) aus Kautschukmischung erstreckt und das Niveau mit der geringsten Höhe H des Verschleißindikators (5) mit Stufen sich wenigstens teilweise in der Rille (2) erstreckt, um eine Verlängerung (7) zu bilden, **dadurch gekennzeichnet, dass** die Verlängerung (7), die von dem Niveau mit der geringsten Höhe H des Verschleißindikators (5) mit Stufen gebildet wird, sich über die gesamte Breite der Rille (2) erstreckt und den Verschleißanzeiger (3) bildet.

2. Reifen (1) nach Anspruch 1, wobei die Höhe H zwischen 1,6 und 2,2 mm beträgt.

3. Reifen (1) nach einem der Ansprüche 1 oder 2, wobei die Hauptachse (EE) des Verschleißindikators (5) mit Stufen im Wesentlichen parallel zur Achse (RR) der Rille (2) ist.

4. Reifen (1) nach einem der Ansprüche 1 bis 3, **dadurch gekennzeichnet, dass** das Ausnehmungsvolumen Vc des zum Ausbilden des Verschleißindikators mit Stufen entfernten Materials im Wesentlichen dem Volumen VP des in der Rille vorhandenen letzten Niveaus entspricht.

5. Reifen (1) nach einem der Ansprüche 1 bis 4, **dadurch gekennzeichnet, dass** eine Inschrift, die einem Abnutzungsgrad des Laufstreifens (8) des Reifens (1) entspricht, in unmittelbarer Nähe jedes der Niveaus (6) des Verschleißindikators vorgesehen ist.

6. Reifen (1) nach einem der Ansprüche 1 bis 5, wobei der Verschleißindikator drei bis sechs Niveaus (6) umfasst.

7. Reifen (1) nach einem der Ansprüche 1 bis 6, wobei der Verschleißindikator vier Niveaus (6) umfasst, von denen das letzte dem Verschleißanzeiger (3) entspricht.

8. Reifen (1) nach einem der Ansprüche 1 bis 7, wobei ein Vorsprung (11), der sich vom Block (4) aus erstreckt, am Fuß des Verschleißindikators so angeordnet ist, dass er dem letzten Niveau benachbart ist.

9. Reifen (1) nach einem der Ansprüche 1 bis 8, wobei sich nur das Niveau mit der geringsten Höhe H des Verschleißindikators (5) mit Stufen in der Rille (2) erstreckt.

10. Reifen (1) nach einem der Ansprüche 1 bis 9, wobei sich alle Niveaus vertieft im Block (4) erstrecken, mit Ausnahme des letzten Niveaus.

## Claims

1. Tire (1) comprising a tread (8), said tread comprising at least one groove (2) extending in a main direction and delimited by at least one block (4) of rubber mix, at least one wear indicator (3) disposed in the groove (2), the wear indicator comprising a contact face (12) intended to come into contact with a road when the tire reaches a limit wear level, said tread (8) comprising a wear indicator with stages (5) provided with a plurality of levels (6), at least one of the levels (6) of the plurality of levels of the wear indicator with stages (5) extending recessed into the block (4) of rubber mix and the lowest height level H of said wear indicator with stages (5) extending at least partially into the groove (2) to form an extension (7), **characterized in that** said extension (7) formed by the lowest height level H of said wear indicator (5) with stages extends into the full width of the groove (2) and constitutes the wear indicator (3).

2. A tire (1) according to one of claims 1, in which the height H is between 1, 6 and 2.2 mm.

3. A tire (1) according to any one of claims 1 to 2, wherein the main axis (EE) of the wear indicator with stages (5) is substantially parallel to the axis (RR) of the groove ( 2).

4. Tire (1) according to any one of claims 1 to 3, **characterized in that** the volume of hollows Vc of material withdrawn to form the wear indicator with stages substantially corresponds to the volume VP of the last level present in the groove.

5. Tire (1) according to any one of claims 1 to 4, **characterized in that** an inscription corresponding to a rate of wear of the tread (8) of the tire (1) is provided in the immediate vicinity of each of the levels (6) of the wear indicator.

6. A tire (1) according to any one of claims 1 to 5, in which the wear indicator comprises between three and six levels (6).

7. A tire (1) according to any one of claims 1 to 6, in which the wear indicator comprises four levels (6), the last of which corresponds to the wear indicator (3).

8. A tire (1) according to any one of claims 1 to 7, wherein a protuberance (11) extending from the block (4) is arranged at the base of the wear indicator adjacent to the last level.

9. A tire (1) according to any one of claims 1 to 8 wherein only the lowest height level H of the wear indicator (5)n with stages extends into the groove (2).

10. A tire (1) according to any one of claims 1 to 9 wherein all the levels extend recessed into the block (4) except the last level.
